Europäisches Patentamt

European Patent Office

Office européen des brevets

(19)

(11)  EP 0 834 522 B1

(12)  **FASCICULE DE BREVET EUROPEEN**

(45) Date de publication et mention
de la délivrance du brevet:
**09.11.2005  Bulletin 2005/45**

(51) Int Cl.⁷: **C08G 18/10**, C08G 18/32,
C09J 175/12

(21) Numéro de dépôt: **97402278.2**

(22) Date de dépôt: **30.09.1997**

(54) **Compositions adhésives à base de polyuréthane et d'une suspension de polyamine, procédé de préparation et utilisation**

Klebstoffzusammensetzungen auf Polyurethanbasis und auf Basis einer Polyaminsuspension,
Herstellungsverfahren und Verwendung

Adhesive compositions on the basis of a polyurethane and a polyamine suspension, preparation
process and use

(84) Etats contractants désignés:
**BE DE ES FR GB IT LU NL**

(30) Priorité:  **02.10.1996  FR 9612008**

(43) Date de publication de la demande:
**08.04.1998  Bulletin 1998/15**

(73) Titulaire: **BOSTIK SA**
**92400 Courbevoie (FR)**

(72) Inventeurs:
• **Miskovic, Michel**
**60200 Compiegne (FR)**

• **Charriere, Bruno**
**60280 Clairoix (FR)**
• **Chenard, Jean-Yves**
**64000 Pau (FR)**
• **Guilpain, Gérard**
**92500 Rueil Malmaison (FR)**

(74) Mandataire: **Granet, Pierre**
**Bostik SA**
**Département Propriété Intellectuelle**
**12, place de l'Iris - La Défense 2**
**92062 Paris La Défense Cedex (FR)**

(56) Documents cités:
**EP-A- 0 171 015          EP-A- 0 547 379**

Printed by Jouve, 75001 PARIS (FR)

## Description

La présente invention concerne des compositions adhésives à base de polyuréthane comprenant une suspension de polyamine. Elle concerne également un procédé de préparation et leur utilisation, notamment pour le collage de matériaux destinés à l'automobile.

Dans l'industrie, notamment automobile, on est souvent amené à assembler toutes sortes de pièces par collage au moyen de compositions adhésives, en particulier thermoréticulables.

Le collage industriel doit satisfaire à plusieurs critères. D'une part, il doit être rapide car il est destiné à être mis en oeuvre sur des chaînes d'assemblage à cadence élevée, le plus souvent n'excédant pas 5 minutes. D'autre part, le collage doit être réalisé à une température modérée, de l'ordre de 120°C afin d'éviter une déformation des pièces qui, en général, sont à base de matières plastiques.

Enfin, le collage requiert idéalement une composition adhésive "prête à l'emploi" (ou composition monocomposante) qui, en outre, est stable pendant au moins 1 mois à une température inférieure à 25°C.

En matière de collage, on connaît des compositions adhésives thermoréticulables.

Dans les demandes de brevet JP-A-071 73243 et EP-A-171 015, on décrit des compositions réticulables à réactivité retardée qui contiennent des isocyanates et/ou des prépolymères uréthanes et des amines partiellement désactivées au moyen de mono- ou polyisocyanates.

Dans JP-A-57 108121, on décrit une résine uréthane destinée à la préparation d'articles moulés qui comprend une fine poudre d'un agent de réticulation tel que la dodécanediamine.

Dans JP-A-05 032948, on propose une composition de scellement à base d'un polyuréthanne ayant au moins une fonction NCO et d'une polyamine ayant au moins deux fonctions $NH_2$ dispersée dans un solvant tel que la paraffine liquide. La solubilité de l'amine doit rester inférieure à 5 g pour 100 g de soluté.

Il a maintenant été trouvé que l'ajout d'une suspension de particules de polyamine de taille déterminée dans des compositions à base de polyuréthanes permet d'en contrôler le durcissement thermique. Les compositions ainsi obtenues présentent de bonnes propriétés d'adhérence et de stabilité au stockage.

La présente invention a donc pour objet des compositions à base de prépolymère polyuréthane et d'une suspension de polyamine, lesquelles compositions sont caractérisées en ce que la teneur en fonctions isocyanates libres du prépolymère polyuréthane est comprise entre 2 et 9 % en poids et la polyamine est sous forme de particules de diamètre moyen compris entre 30 et 60 μm.

Plus particulièrement, les compositions selon l'invention comprennent des particules de polyamine dont le diamètre moyen est compris entre 40 et 50 μm et mieux encore une teneur en fonctions isocyanates comprise entre 3 et 8 % en poids.

Un autre objet de l'invention concerne un procédé de préparation desdites compositions qui consiste à faire réagir au moins un polyol et au moins un polyisocyanate pour former un prépolymère polyuréthane ayant une teneur en fonctions isocyanates libres comprise entre 2 et 9 % en poids, et mélanger ledit prépolymère avec une suspension d'une polyamine dont le diamètre moyen des particules est compris entre 30 et 60 μm.

Un autre objet de l'invention concerne l'utilisation desdites compositions pour le collage des matériaux, notamment destinés à l'automobile.

Les compositions selon l'invention sont préparées selon le procédé décrit de manière détaillée comme suit :

Dans un premier temps, on fait réagir au moins un polyol avec au moins un polyisocyanate pour former un prépolymère à terminaisons isocyanates dont la teneur en NCO est comprise entre 2 et 9 % en poids.

Le polyol est généralement choisi parmi les polyols possédant une fonctionnalité supérieure ou égale à 2, par exemple les polyols de type polydiène tel que le polybutadiène, le polyisoprène, les polyols de type polyester tels que les polycaprolactone polyols, les polyols de type polyéther tels que le polyoxyoxyéthylène, le polyoxypropylène et le polyoxytétraméthylène, et les mélanges d'un ou plusieurs de ces composés.

On utilise de préférence les polyols de type polyester ou polyéther.

Le polyisocyanate est généralement choisi parmi les polyisocyanates aromatiques tels que le 2,4- ou le 4,4'-diphénylméthane-diisocyanate (MDI) et le toluènediisocyanate (TDI), les polyisocyanates aliphatiques tels que l'hexaméthylènediisocyanate (HMDI), les polyisocyanates alicycliques tels que l'isophoronediisocyanate (IPDI), les polyisocyanates modifiés, par exemple obtenus par réaction avec le triméthylol-propane, de l'eau ou par cyclisation, ainsi que les mélanges d'un ou plusieurs de ces composés.

De préférence, on utilise les polyisocyanates aromatiques et plus particulièrement le MDI.

La réaction entre le polyol et le polyisocyanate est généralement effectuée à une température comprise entre 60 et 110°C, de préférence 70 et 90°C et pendant une durée variant de 2 à 10 heures, de préférence 3 à 5 heures.

Le rapport du nombre de fonctions isocyanates au nombre de fonctions hydroxyles est généralement compris entre 1,5 et 3,6, et de préférence 2 et 3.

A l'issue de la réaction, on récupère un prépolymère dont la teneur en fonctions isocyanates est comprise entre 2 et 9 % en poids et de préférence 3 et 8 %.

Dans un deuxième temps, on mélange ledit avec une suspension de polyamine dont le diamètre moyen des particules est compris entre 30 et 60 μm, et de préférence entre 40 et 50 μm.

La polyamine est généralement choisie parmi les amines renfermant au moins deux fonctions amines primaire (s) et/ou secondaire(s).

La polyamine présente un point de fusion avantageusement compris entre 50 et 80°C, et mieux encore entre 55 et 70°C. De préférence, on utilise la 1,12-dodécanediamine et le 4,4'-diaminodiphénylméthane.

La suspension de polyamine est généralement mise en oeuvre à raison de 40 à 55 % en poids de polyamine dans un liquide, et de préférence à raison de 48 à 52 % en poids.

Par "liquide", on entend ici tout composé ou mélange de composés liquides à une température de l'ordre de 25°C et qui n'est pas susceptible de réagir avec les fonctions isocyanates libres du prépolymère précité.

Ledit liquide présente avantageusement un faible pouvoir de solubilisation de la polyamine.

A titre d'exemple de tels liquides, on peut citer les paraffines, les polybutadiènes, les phtalates tels que le di (isooctyl)phtalate ou le di(éthylhexyl)phtalate ainsi que divers mélanges, par exemple à base d'isomères du dibenzyltoluène (Jarytherm DBT; ELF ATOCHEM S.A.), de mono et bis(xylyl)xylène (Jarysol XX; ELF ATOCHEM S.A.), de tétraméthylèneglycol di-2-hexanoate (Fléxol 4GO; UNION CARBIDE) ou de phtalates (Santicizer 97 ou 128 ; MONSANTO).

Dans l'étape de mélange du prépolymère et de la suspension de polyamine, le rapport du nombre de fonctions amines au nombre de fonctions isocyanates est généralement compris entre 0,8 et 1,2, et de préférence 0,9 et 1,1.

Aux constituants du mélange précité, on peut éventuellement ajouter divers additifs tels que des charges stéaratées ou non, par exemple du carbonate de calcium, du sulfate de baryum ou du talc, des catalyseurs, par exemple des amines tertiaires telles que la triéthylamine, la triéthylènediamine ou le bis(diméthylmorpholino)éthyléther, des composés métalliques tels que des sels d'étain ou de bismuth, et des tamis moléculaires de préférence 3 ou 4Å.

Le mélange du prépolymère, de la suspension de polyamine, et éventuellement des additifs, est généralement effectué à une température comprise entre 15 et 30°C, de préférence 20 et 25°C et pendant une durée suffisante pour obtenir un mélange homogène.

A l'issue de l'étape de mélange, on récupère une composition qui réticule en moins de 5 minutes à une température inférieure à 120°C.

Une telle composition conserve ses propriétés adhésives au cours du temps. Elle peut avantageusement être utilisée pour le collage de matériaux à base de bois, de métal ou de matières plastiques chargées ou non avec des agents de renforcement minéraux et/ou organiques. A titre d'exemples de tels matériaux, on peut citer le polyester chargé avec des fibres de verre.

Les exemples qui suivent permettent d'illustrer l'invention.

Dans les exemples, on mesure la résistance en traction-cisaillement par la méthode qui consiste à appliquer un joint parallélipipédique (2,5 cm x 1,5 cm épaisseur : 2 mm) de colle entre deux supports en polyester chargé avec des fibres de verre, préalablement dégraissé au moyen de méthyléthylcétone et soumettre l'ensemble à 140°C pendant 2 à 10 minutes.

Après un retour à la température ambiante, l'éprouvette ainsi obtenue est soumise à une sollicitation en traction-cisaillement avec un dynamomètre de traction (10 mm/min).

La liaison adhésif/support est caractérisée par la contrainte exprimée en MPa et le type de rupture: adhésive (RA), cohésive (RC) ou avec délaminage du support (DEL). Lorsque plus d'un type de rupture intervient, on indique la valeur en pourcentage surfacique de chacun des types de rupture. On précise que les ruptures avec délamination du support sont les ruptures souhaitées.

## EXEMPLE 1

Dans un réacteur équipé d'un dispositif d'agitation, on introduit 40 parties en poids de polyétherpolyol (f=3 ; $M$n=4700; VORANOL CP4755 ; DOW), 18 parties en poids de polyétherpolyol (f=3 ; $\overline{M}$n=3000 ; VORANOL CP3131 ; DOW), 8 parties en poids de polycaprolactonepolyol (f=3; TONE 0305; UNION CARBIDE) et 34 parties en poids de 4,4'-diphénylméthanediisocyanate (Isonate M125 ; DOW).

Après 4 heures à 75-80°C, on obtient un prépolymère contenant 7,6 % en poids de fonctions isocyanates libres, un rapport du nombre de fonctions NCO/OH égal à 3,03 et une viscosité Brookfield à 23°C égale à 40000 mPa.s.

Dans un mélangeur maintenu à 20°C, on introduit (en parties en poids) :

- prépolymère précité          100
- bis(diméthylmorpholino)éthyléther (TEXACO)          0,03
- dibutyldilaurate d'étain (FLUKA)          0,46
- tamis moléculaire (SA 1720 ; CECA S.A.)          30
- carbonate de calcium          53

- 1,12-dodécanediamine *       38,5

Après 90 minutes, on récupère un adhésif dont on mesure la résistance en traction-cisaillement (Tableau 1).

## EXEMPLE 2

On procède dans les conditions de l'exemple 1 modifié en ce que l'on utilise 42,35 parties en poids de 1,12-dodécanediamine.
Les mesures de résistance en traction-cisaillement sont présentées dans le tableau 1.

## EXEMPLE 3

On procède dans les conditions de l'exemple 1 en présence de 1,12-dodécanediamine dont le diamètre moyen des grains est compris entre 150 et 200 $\mu$m.
Les mesures de résistance en traction-cisaillement sont présentées dans le tableau 1.

TABLEAU 1

| EXEMPLE | TEMPS DE RETICULATION (minutes) | | | | | | | |
|---|---|---|---|---|---|---|---|---|
|  | 2 | 3 | 4 | 5 | 6 | 7 | 8 | 10 |
| 1 | 0,59 RC | 0,79 RC | 1,28 RC | 2,17 RC | 2,90DEL | 3,06DEL | - | - |
| 2 | 3,58DEL | 3,17DEL | 4,05DEL | - | - | - | - | - |
| 3 comparatif | - | - | 0,375RC | - | 1,035RC | - | 2,575 DEL | 2,78DEL |

**Revendications**

1.    Utilisation pour le collage de matériaux à base de bois, de métal ou de matières plastiques chargées ou non avec des agents de renforcement minéraux et/ou organiques, de compositions adhésives à base de polyuréthane préparées selon le procédé consistant à faire réagir au moins un polyol et au moins un polyisocyanate pour former un pré-polymère de polyuréthane, dont la teneur en fonctions isocyanates libres est comprise entre 2 et 9 % en poids, et à lui ajouter une suspension de particules de polyamine dont le diamètre moyen est compris entre 30 et 60 $\mu$m, ladite polyamine présentant un point de fusion compris entre 50 et 80°C.

2.    Utilisation selon la revendication 1, **caractérisée en ce que** le matériau est le polyester renforcé avec des fibres de verre.

3.    Utilisation selon l'une des revendications 1 ou 2, **caractérisée en ce que** la polyamine présente un point de fusion compris entre 55 et 70°C.

4.    Utilisation selon l'une des revendications 1 à 3, **caractérisée en ce que** le diamètre moyen des particules de polyamine est compris entre 40 et 50 $\mu$m.

5.    Utilisation selon l'une des revendications 1 à 4, **caractérisée en ce que** la teneur en fonctions isocyanates libres du pré-polymère de polyuréthane est comprise entre 3 et 8 % en poids.

6.    Utilisation selon l'une des revendications 1 à 5, **caractérisée en ce que** le polyol est choisi parmi les polyols du type polydiène, polyester et polyéther.

7.    Utilisation selon l'une des revendications 1 à 5, **caractérisée en ce que** le polyisocyanate est choisi parmi les polyisocyanates aromatiques, aliphatiques, alicycliques ou modifiés.

8.    Utilisation selon l'une des revendications 1 à 5, **caractérisée en ce que** la suspension des particules de polyamine est ajoutée dans une quantité telle que le rapport du nombre de fonctions amines au nombre de fonctions isocyanates est compris entre 0,8 et 1,2.

*La 1,12-dodécanediamine utilisée est une suspension contenant 50 parties en poids d'une poudre de 1,12-dodécanediamine (diamètre moyen des particules = 50 $\mu$m), 50 parties en poids d'un liquide de suspension à base de polybutadiène (POLYOIL 130 ; HÜLS) et 5 parties en poids de tamis moléculaire (SA 1720 ; CECA S.A.).

9. Utilisation selon l'une des revendications 1 à 5, **caractérisée en ce que** la polyamine est choisie parmi les amines renfermant au moins deux fonctions amines primaire(s) et/ou secondaire(s).

10. Utilisation selon la revendication 9, **caractérisée en ce que** la polyamine est la 1,12-dodécanediamine ou le 4,4'-diaminodiphénylméthane.

11. Utilisation selon l'une des revendications 1 à 10, **caractérisée en ce que** la suspension de polyamine est réalisée au moyen d'un liquide qui n'est pas susceptible de réagir avec les fonctions isocyanates libres du prépolymère.

## Patentansprüche

1. Verwendung von Klebstoffzusammensetzungen auf Basis von Polyurethan, die nach einem Verfahren erhältlich sind, bei dem man mindestens ein Polyol und mindestens ein Polyisocyanat zu einem Polyurethan-Prepolymer mit einem Gehalt an freien Isocyanatfunktionen zwischen 2 und 9 Gew.-% umsetzt und dieses zu einer Suspension von Polyaminteilchen mit einem mittleren Durchmesser zwischen 30 und 60 µm gibt, wobei das Polyamin einen Schmelzpunkt zwischen 50 und 80°C aufweist, zum Verkleben von Materialien auf Basis von Holz, Metall oder gegebenenfalls mit anorganischen oder organischen Verstärkungsmitteln gefüllten Kunststoffen.

2. Verwendung nach Anspruch 1, **dadurch gekennzeichnet, daß** es sich bei dem Material um glasfaserverstärkten Polyester handelt.

3. Verwendung nach Anspruch 1 oder 2, **dadurch gekennzeichnet, daß** das Polyamin einen Schmelzpunkt zwischen 55 und 70°C aufweist.

4. Verwendung nach einem der Ansprüche 1 bis 3,
**dadurch gekennzeichnet, daß** der mittlere Durchmesser der Polyaminteilchen zwischen 40 und 50 µm liegt.

5. Verwendung nach einem der Ansprüche 1 bis 4,
**dadurch gekennzeichnet, daß** der Gehalt des Polyurethan-Prepolymers an freien Isocyanatfunktionen zwischen 3 und 8 Gew.-% liegt.

6. Verwendung nach einem der Ansprüche 1 bis 5, **dadurch gekennzeichnet, daß** das Polyol unter Polyolen vom Polydien-, Polyester- und Polyether-Typ ausgewählt ist.

7. Verwendung nach einem der Ansprüche 1 bis 5, **dadurch gekennzeichnet, daß** das Polyisocyanat unter aromatischen, aliphatischen, alicyclischen oder modifizierten Polyisocyanaten ausgewählt ist.

8. Verwendung nach einem der Ansprüche 1 bis 5, **dadurch gekennzeichnet, daß** die Suspension der Polyaminteilchen in einer solchen Menge zugegeben wird, daß das Verhältnis der Zahl der Aminfunktionen zur Zahl der Isocyanatfunktionen zwischen 0,8 und 1,2 liegt.

9. Verwendung nach einem der Ansprüche 1 bis 5, **dadurch gekennzeichnet, daß** das Polyamin unter Aminen mit mindestens zwei primären und/oder sekundären Aminfunktionen ausgewählt ist.

10. Verwendung nach Anspruch 9, **dadurch gekennzeichnet, daß** es sich bei dem Polyamin um 1,12-Dodecandiamin oder 4,4'-Diaminodiphenylmethan handelt.

11. Verwendung nach einem der Ansprüche 1 bis 10, **dadurch gekennzeichnet, daß** die Polyaminsuspension mit Hilfe einer Flüssigkeit hergestellt wird, die nicht zur Reaktion mit den freien Isocyanatfunktionen des Prepolymers befähigt ist.

## Claims

1. Use, for bonding materials based on wood, metal or plastics, the said plastics possibly being filled with mineral and/or organic reinforcing agents, of polyurethane-based adhesive compositions prepared according to the method consisting in reacting at least one polyol and at least one polyisocyanate to form a polyurethane prepolymer which has a free isocyanate functional group content of between 2 and 9% by weight, and mixing the said prepolymer with a suspension of polyamine particles whose mean diameter is between 30 and 60 μm the said polyamine having a melting point of between 50 and 80°C.

2. Use, according to Claim 2, **characterized in that** the material is polyester reinforced with glass fibres.

3. Use according to either of Claims 1 and 2, **characterized in that** the polyamine has a melting point of between 55 and 70°C.

4. Use, according to one of Claims 1 to 3, **characterized in that** the mean diameter of the polyamine particles is between 40 and 50 μm.

5. Use, according to one of Claims 1 to 4, **characterized in that** the free isocyanate functional group content of the polyurethane prepolymer is between 3 and 8% by weight.

6. Use according to one of Claims 1 to 5, **characterized in that** the polyol is chosen from polyols of the polydiene, polyester and polyether type.

7. Use according to one of Claims 1 to 5, **characterized in that** the polyisocyanate is chosen from aromatic, aliphatic, alicyclic or modified polyisocyanates.

8. Use according to one of Claims 1 to 5, **characterized in that** the suspension of polyamine particles is added in an amount such that the ratio of the number of amine functional groups to the number of isocyanate functional groups is between 0.8 and 1.2.

9. Use according to one of Claims 1 to 5, **characterized in that** the polyamine is chosen from amines containing at least two primary and/or secondary amine functional groups.

10. Use according to Claim 9, **characterized in that** the polyamine is 1,12-dodecanediamine or 4,4'-diaminodiphenylmethane.

11. Use according to one of Claims 1 to 10, **characterized in that** the polyamine suspension is produced by means of a liquid which is not capable of reacting with the free isocyanate functional groups of the prepolymer.